# EUROPEAN PATENT APPLICATION

(11) **EP 3 816 740 A1**
(43) Date of publication of application: **05.05.2021**
(21) Application number: 19205616.6
(22) Date of filing: 28.10.2019
(51) Int. Cl.: G05B 19/042

(54) **METHOD FOR VIRTUAL CONFIGURATION OF AN AUTOMATION SYSTEM**

(71) Applicant: Siemens Aktiengesellschaft, 80333 München (DE)
(72) Inventor: Hawkridge, Vitus, 89537 Giegen an der Brenz (DE); Jehl, Gautier, 90427 Nürnberg (DE)

(57) **Abstract**

The invention relates to a Method for virtual configuration of an automation system (1), which comprises at least one standard automation component (2, 3, 4) and at least one individually created automation component (5), the method comprising the following steps:
Providing an engineering system (6) allowing the virtual configuration of a structure of an automation system (1) ;
Providing a pre-configured virtual model for each standard automation component (2, 3, 4) of the automation system (1) by the engineering system (6);
Selecting at least one standard automation component (2, 3, 4) and inserting the corresponding pre-configured virtual model(s) into the virtual configuration;
Selecting at least one individually created automation component (5) and inserting at least one externally programmed virtual model mapping the selected individually created automation component(s) (5) into the virtual configuration.

## Description

The present invention relates to a method for virtual configuration of an automation system, which comprises at least one standard automation component and at least one individually created automation component.

Automated fabrication processes allow a plant or a fabrication process to be operated with a low staffing level while ensuring a reliable monitoring and complete retracting of the production process. Such an automated fabrication process is commonly driven by an automation system which may comprise a large number of different automation components such as control units, signal modules, sensors, drives, steppermotors, etc.

Examples, in which such automation systems are set up, are the manufacturing of vehicles in the automotive industry, producing electronics, producing food and beverage products and many more.

In order to configure an automation system, engineering systems are known. These systems normally allow to create a virtual configuration of a structure of an automation system comprising a plurality of automation components.

Furthermore, engineering systems can be used to configure functionalities of automation components in the context of an automation system, in particular for the application intended by the user-operator, for example the operator of an industrial plant. An engineering system can, for example, be used to configure a display functionality of an HMI-display-panel of an automation system for a specific automation project/ application. HMI stands, as usual for Human Machine Interface. A user/operator or configuration engineer can by use of an engineering system configure what type of graph is used to visualize measurement data on the HMI-display panel. Such a configuration can, for example, be performed via an input mask of the engineering system.

An example of an engineering system is the TIA-portal of Siemens AG (Totally Integrated Automation Portal). Engineering systems can be embodied by a software, for example a program that is running on hardware of the user/operator.

As regards the TIA-portal all products of the TIA-domain, the complete family of Simatic products from Siemens AG, are available in the TIA portal, which is a fully integrated engineering system. With this product family and the TIA-portal, a complete solution can be obtained. The TIA-portal as an example for engineering systems provides pre-configured virtual models for a large number of standard automation components which may be used in an automation system.

This offers the big advantage of comprehensively integrated engineering, ranging from field devices via programmable logic controllers (PLC's, for example the Simatic S7-1200 and Simatic S7-1500) and human machine interfaces (for example Simatic comfort panels) up to a complete SCADA-system (supervisory control and data acquisition, an example for a SCADA-system is the Simatic winCC professional).

Such a comprehensive integration offers the user/operator an easy configuration of a complete automation system having a large number of standard automation components. For each automation component, a pre-configured virtual model is provided by the engineering system. The pre-configured virtual model corresponding to a selected standard automation component can be inserted into a virtual configuration. That may be performed by means of the engineering system in order to map the structure of an automation system.

The standard automation components can, for example, be central processing units (CPU), HMI devices or modules for the input or output of digital or analog signals. These standard automation components are normally connected by means of standardized interfaces, which are also mapped in the virtual configuration of an automation system.

In the recent years, there was a heavy increase of the inclusion of software simulation into automation systems of a plant. Prior to or during commissioning, it is often provided to perform simulations to avoid malfunctioning or damages when the plant is set in operation. Correspondingly, simulations can avoid cost-intensive repairs later on.

In addition, virtual sensors become more and more popular. Virtual models of such sensors are normally configured or programmed by use of third-party applications like Matlab and must be integrated into a virtual configuration performed by use of an engineering system.

To integrate such virtual sensors and/or to conduct simulations, normally the user has to connect the engineering system to a third-party application, for example a specific software environment for conducting simulations. The software environment could be PLCSIM Advanced, for example. In case of a virtual sensor, the user has to connect the engineering system to advanced virtual models that were programmed on and/or are provided by a third-party application like Matlab.

In both cases it is very time-consuming to connect all the different signal interfaces between the virtual configuration of the automation system and the software environment for simulation or a third-party application. In larger automation systems, a lot of signals must be connected precisely. Even small mistakes in this connection lead to non-usable simulations and/or to a wrong behavior, for example, of a virtual sensor.

For this signal mapping between the engineering system and the software environment for simulation or the third-party application, respectively, different methods are existing to ensure a unique and unambiguous mapping. For example, the interfaces, which have to be connected, can be directly mapped by a name or by an address. Another possibility is to create a mapping algorithm or to use structures instead of signals. Furthermore, it would be possible to export all signals from the engineering system and to re-import all signals in the third-party application or in the software environment for simulation.

However, each solution is very time-consuming and has a high risk of errors which require, in consequence, an extremely time-intensive debugging process.

Therefore, it is the object of the present invention to provide a method for virtual configuration of an automation system that allows an easy integration of an individually created automation component, and an easy possibility to perform a simulation, in particular comprising such an individually created automation component.

This object is solved by a method for virtual configuration mentioned at the beginning in that the method comprises the following steps:
Providing an engineering system allowing the virtual configuration of a structure of an automation system;
Providing a pre-configured virtual model for each standard automation component of the automation system by the engineering system;
Selecting at least one standard automation component and inserting the corresponding pre-configured virtual model(s) into the virtual configuration;
Selecting at least one individually created automation component and inserting at least one externally programmed virtual model mapping the selected individually created automation component(s) into the virtual configuration, wherein the externally programmed virtual model was created in a third party-application and is not provided by the engineering system or not contained therein;
Automated creating of a consistent addressing extending over all selected standard automation components and individually created automation components selected, in particular by means of the engineering system.

The invention is based on the consideration that a consistent and global addressing, which extends over all automation components, makes it possible to address directly the interface(s) in particular of an individually created automation component in a clear and unambiguous manner. Errors in addressing of an externally programmed virtual model can be avoided and, in particular, a simulation without having the trouble of not correctly addressed interfaces can be conducted directly in the engineering system. The connection with another software tool is not more necessary, as the externally programmed virtual model is fully integrated into the engineering system.

According to a preferred embodiment of the invention, each standard automation component and/or each individually created automation component selected comprises interfaces, in particular input and/or output interfaces, and a unique address is assigned to each interface, in particular automatically by the engineering system. Such a detailed addressing ensures that each single input/output interface has a unique address over the entire automation system. An error in addressing is excluded when the program code is created and when simulations are performed.

Preferably, the externally programmed virtual model of at least one, in particular each individually created automation component inserted into the virtual configuration, has been created by means of Matlab, Simcenter Amesim, Simulink or Stateflow. Such software applications are common third-party applications to create mathematical models of automation components like sensors for example.

The externally programmed virtual model of at least one, preferably of each individually created automation component inserted into the virtual configuration, can have been stored in and/or inserted into a respective generic file and/or can be provided as such to the engineering system and/or can be imported as such into the engineering system. A generic file defines the automation component in a standardized format which can be read and processed by the engineering system. In context with the TIA portal offered and distributed by Siemens AG, such a generic file is also called hardware description file, is adjusted to the specific functionality of the concrete individually created automation component and uses the format .GSD.

Preferably, at least one selected individually created automation component comprises or is formed as a software sensor. A software sensor is very popular to issue a value of a state variable which cannot be measured directly but has to be calculated from other parameters. Consequently, a software sensor comprises a sensor which measures a parameter directly and calculates on the basis of this parameter a virtual value of another parameter. For example, a software sensor can comprise a real sensor for measuring the distance of an object and can calculate - on the basis of measurements of the distance at different times - the velocity of this object. For this calculation, a mathematical model is normally necessary, which can be programmed on a third-party application like Matlab or the like.

According to a further elaboration of the invention, at least one selected standard automation component comprises a central processing unit or is formed as such a one. A central processing unit is used to run a logical program and to communicate with other automation components, in particular with each other automation component of the automation system.

At least one selected standard automation component may comprise signal modules, in particular for digital and/or analog signals, or is designed as such. Furthermore, at least one selected standard automation component may comprise or may be designed as a human-machine interface, in particular a display device and/or input device, which is preferably formed as a touch panel. Such human-machine-interfaces allow an operator to observe an industrial process or the state of a plant as well as to input parameters or to change the status of different components.

Components of a plant may be connected to signal modules via which they may communicate by means of digital and/or analog signals. For example, a sensor which measures a distance, may convert this signal into an analog signal between 0 and 10 V or between 4 mA and 20 mA in order to transmit this signal in a standardized manner to a central processing unit via a signal module. This signal module may be able to convert the analog signal received, for example, into a standardized digital signal for communication with a central processing unit.

Furthermore, at least one standard automation component may comprise a control module for controlling electrical devices, in particular for controlling servomotors or stepper motors, or may be formed as such. Stepper motors or servomotors need a specific communication for being controlled, so a specific control module is able to communicate with such an electric device via a specific interface. Such a module is preferably connected to a central processing unit which monitors the process of the electrical devices and communicates logically with other automation components.

In a manner known per se, the pre-configured virtual models of the standard automation components can be each present in the form of a generic file and/or are provided as such by the engineering system. Such a generic file which may also be called hardware description file describes the specific functionality of the concrete automation component in a standardized format, for example as a .GSD-file.

According to a further embodiment of the invention, a simulation of at least one individually created automation component may be carried out. By means of such a simulation a malfunctioning of the automation system can be discovered before commissioning or during commissioning of a plant and allows to discover problems which may occur during operation at a very early stage.

After the virtual configuration of the structure of the automation system, preferably, a program code is created which can be uploaded into the automation system. For example, such a program code defines relations between different signals and how they are treated. Furthermore, a program code can include calculations which allow to conclude specific values from parameters that are measured. The program code can for example be created by means of the engineering system which allows to create an instruction list, a function chart or a ladder diagram. The engineering system may be able to translate such a graphically supported created program code into a binary program code and to transfer it to the automation system.

Preferably, the program code is uploaded into the automation components. As long as the automation components, comprising the standard automation components and the individually created automation components, use a consistent addressing extending over all components it doesn't matter on which component concretely the program is uploaded as the program is related to this unique and unambiguous addressing.

According to an embodiment of the method according to the invention, the simulation extends over all automation components. Preferably, the simulation extends over at least one individually created automation element. In other words, the simulation may be limited to one individually created automation component which means that only the externally programmed virtual model is tested during the simulation. Alternatively or additionally the simulation may extend over all automation components which means that the complete automation system is tested.

According to an embodiment of the invention, the simulation may run virtually in the engineering system. This means that no program code need to be transmitted to the automation components of the automation system, but the simulation only runs virtually.

Further features and advantages of the present invention become clear by the following description of embodiments of the invention with reference to the enclosed drawing. The figure shows:
- Figure 1: a virtual configuration of an automation system;
- Figure 2: a list of addresses for the automation system shown in Figure 1.

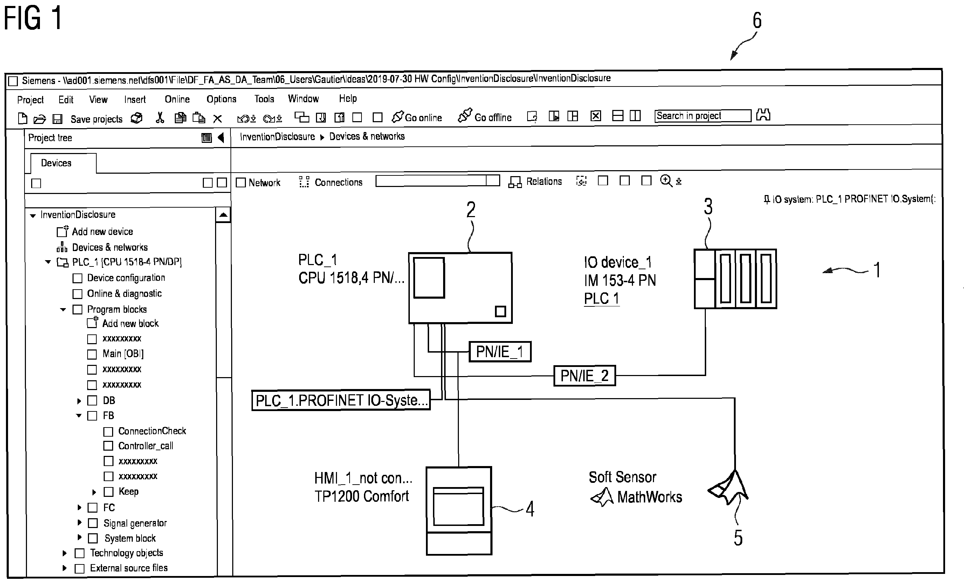

In the following, the method according to the invention is described with the aid of an automation system 1, the virtual configuration of which is shown in Figure 1.

The automation system 1 comprises in total three standard automation components and one individually created automation component. The standard automation components are belonging to the Simatic S7-1500 family manufactured and distributed by Siemens AG. In concrete terms, the standard automation components of the automation system 1 comprise a central processing unit 2, a module for input and output of digital signals (I/O-device) 3 and a human-machine-interface, presently formed as a touch panel 4.

These standard automation components 2, 3, 4 each have a Profinet-interface by means of which they are connected by use of a data cable for communication which is formed as an Ethernet cable.

The automation system further comprises one individually created automation component, concretely a software sensor 5. A software sensor 5 is generally characterized by the possibility to calculate the value of a physical size on the basis of another parameter directly measured. Presently, the software sensor 5 is a sensor which calculates the velocity of an object which is moved in an industrial plant, on the basis of measuring of the position of this object at different times.

The software sensor 5 also comprises a Profinet-interface and is physically connected to the central processing unit 2 by means of a data cable.

Figure 1 shows a virtual configuration of the structure of the automation system 1 which was built up by an engineering system 6 (presently the TIA-portal of Siemens AG) that is provided as a first step of the method according to the invention.

For each available standard automation component, a pre-configured virtual model is provided by the engineering system.

As it is shown in Figure 1, the three standard automation components 2, 3, 4 of the automation system 1 were selected and the corresponding pre-configured virtual models were inserted into the virtual configuration, as well as their connection by means of a data cable using their Profinet-interfaces.

After that, the individually created automation component, presently the software sensor 5, is selected. The corresponding externally programmed virtual model, which maps the software sensor 5, is inserted into the virtual configuration. Presently, the externally programmed virtual model of the software sensor 5 was created in a third-party application, in concrete terms by means of Matlab. This means, that it is not provided by the engineering system 6 or contained therein.

In order to ensure a compatibility between the virtual model of the software sensor 5 and the virtual models of the standard automation components 2, 3, 4, the virtual model of the software sensor 5 has been stored in a generic file and imported as such into the engineering system 6. In concrete terms, the generic file has the data format .GSD. The same data format is used for the pre-configured virtual models of the standard automation components 2, 3, 4 which are provided by the engineering system 6.

Having completed the virtual configuration as shown in Figure 1, a consistent addressing extending over all standard automation components 2, 3, 4 and the individually created automation component 5 is created in an automated manner by means of the engineering system 6. In other words, a unique address is assigned to each interface of the central processing unit 2, the I/O-device 3, the touch panel 4 and the software sensor 5, independently from whether the corresponding virtual models were pre-configured and provided by the engineering system or externally programmed in a third-party application.

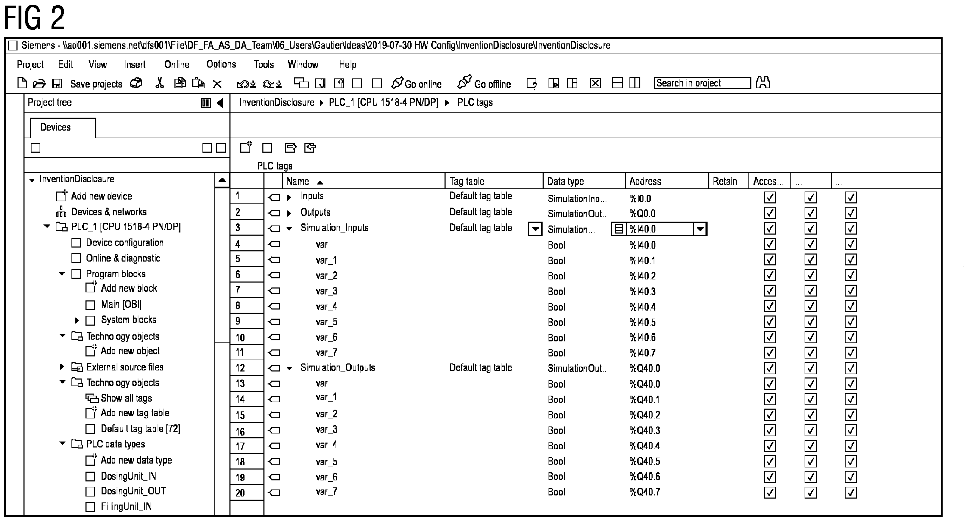

Figure 2 shows an excerpt of the list of addresses which were assigned automatically by the engineering system 6 to the interfaces of the different automation components 2, 3, 4, 5. In this list, it is visible that the TIA-portal automatically assigned the software sensor input addresses in the range of 140.0 to 145.0 and output addresses in the range of Q40.0 to Q45.0. This means, that to each interface of the individually created automation component, presently the software sensor 5, a unique address is assigned and can be used in a program code in the same manner as regarding the standard automation components 2, 3, 4 for which pre-configured virtual models are provided by the engineering system 6.

As the next step, a program code is created and uploaded into the automation components 2, 3, 4, 5. The program code for example may be created by use of the engineering system 6 and can be written by means of a statement list, a ladder diagram or a function chart. After having been translated into a binary program code, this program code is uploaded into the automation components 2, 3, 4, 5.

In addition, before commissioning of the automation system 1, a simulation can be run directly on the real automation components or only in the engineering system 6. In this way, the behavior of the software sensor 5 can be simulated without the need to use an additional simulation software or a third-party application and without the need to map input and output signals between the engineering system 6 and an additional software or a third-party application. In this way, errors and mistakes which require a long time debugging can be avoided, in particular if in more complicated automation systems a large number of signals is necessary.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. Method for virtual configuration of an automation system (1), which comprises at least one standard automation component (2, 3, 4) and at least one individually created automation component (5), the method comprising the following steps:
Providing an engineering system (6) allowing the virtual configuration of a structure of an automation system (1) ;
Providing a pre-configured virtual model for each standard automation component (2, 3, 4) of the automation system (1) by the engineering system (6);
Selecting at least one standard automation component (2, 3, 4) and inserting the corresponding pre-configured virtual model(s) into the virtual configuration;
Selecting at least one individually created automation component (5) and inserting at least one externally programmed virtual model mapping the selected individually created automation component(s) (5) into the virtual configuration, wherein the externally programmed virtual model was created in a third-party application and is not provided by the engineering system (6) or not contained therein;
Automated creating of a consistent addressing extending over all selected standard automation components (2, 3, 4) and individually created automation components (5), in particular by means of the engineering system (6).

2. Method according to claim 1, **characterized in that** at least one selected standard automation component comprises a central processing unit (2) or is formed as such a one.

3. Method according to claim 1 or 2, **characterized in that** each standard automation component (2, 3, 4) and/or each individually created automation component (5) selected comprises interfaces, in particular input and/or output interfaces, and a unique address is assigned to each interface, in particular automatically by the engineering system.

4. Method according to any of the preceding claims, **characterized in that** the externally programmed virtual model of at least one, in particular each individually created automation component (5) inserted into the virtual configuration, has been created by means of Matlab, Simcenter Amesim, Simulink or Stateflow.

5. Method according to any of the preceding claims, **characterized in that** the externally programmed virtual model of at least one, preferably of each, individually created automation component (5) inserted into the virtual configuration, has been stored in and/or inserted into a respective generic file and/or is provided as such to the engineering system (6) and/or is imported as such into the engineering system (6).

6. Method according to any of the preceding claims, **characterized in that** at least one selected individually created automation component (5) comprises or is formed as a software sensor.

7. Method according to any of the preceding claims, **characterized in that** at least one selected standard automation component (3) comprises signal modules, in particular for digital and/or analog signals, or is designed as such.

8. Method according to any of the preceding claims, **characterized in that** at least one selected standard automation component (4) comprises or is designed as a human-machine interface, in particular a display device and/or input device, which is preferably formed as a touch panel (4).

9. Method according to any of the preceding claims, **characterized in that** at least one selected standard automation component comprises a control module for controlling electrical devices, in particular for controlling servomotors or stepper motors, or is formed as such.

10. Method according to any of the preceding claims, **characterized in that** the pre-configured virtual models of the standard automation components (2, 3, 4) are each present in the form of a generic file and/or are provided as such by the engineering system.

11. Method according to any of the preceding claims, **characterized in that** further a simulation of at least one individually created automation component (5) is carried out.

12. Method according to any of the preceding claims, **characterized in that**, after the virtual configuration of the structure of the automation system, a program code is created which can be uploaded into the automation system (1).

13. Method according to claim 12 and 11, **characterized in that** the program code is uploaded into the automation components (2, 3, 4, 5).

14. Method according claim 13, **characterized in that** the simulation extends over all automation components (2, 3, 4, 5), and/or **in that** the simulation extends over at least one individually created automation element (5).

15. Method according claim 11, **characterized in that** the simulation runs virtually in the engineering system (6).
